# EUROPÄISCHE PATENTSCHRIFT

(11) **EP 2 794 352 B1**
(45) Veröffentlichungstag und Bekanntmachung des Hinweises auf die Patenterteilung: **19.08.2020**
(21) Anmeldenummer: 12809633.6
(22) Anmeldetag: 29.11.2012
(51) Int. Cl.: B60Q 1/42

(54) **RÜCKSTELLVORRICHTUNG FÜR EINE LENKSTOCKSCHALTEREINRICHTUNG EINES KRAFTFAHRZEUGS UND KRAFTFAHRZEUG**
RESETTING DEVICE FOR A STEERING COLUMN SWITCH SYSTEM OF A MOTOR VEHICLE AND MOTOR VEHICLE
DISPOSITIF DE RAPPEL POUR UN ENSEMBLE DE COMMUTATION SUR COLONNE DE DIRECTION D'UN VÉHICULE AUTOMOBILE ET VÉHICULE AUTOMOBILE

(30) Priorität: 24.12.2011 DE 102011122445
(43) Veröffentlichungstag der Anmeldung: 29.10.2014
(73) Patentinhaber: Valeo Schalter und Sensoren GmbH, 74321 Bietigheim-Bissingen (DE)
(72) Erfinder: LIPFERT, Rainer, 74076 Heilbronn (DE); HASCH, Martin, 71701 Schwieberdingen (DE); SIMONIS, Karl, 75428 Illingen (DE)
(74) Vertreter: Pothmann, Karsten
(86) Internationale Anmeldenummer: PCT/EP2012/073896
(87) Internationale Veröffentlichungsnummer: WO 2013/092150

(56) Entgegenhaltungen:
- EP-A2- 1 060 949
- DE-A1- 19 758 288
- DE-A1- 19 904 620
- DE-C1- 4 219 393
- FR-A1- 2 872 111

## Beschreibung

Die Erfindung betrifft eine Rückstellvorrichtung für eine Lenkstockschaltereinrichtung eines Kraftfahrzeugs, mit einem Auslöseelement, mittels welchem ein Betätigungshebel der Lenkstockschaltereinrichtung aus einer Betätigungsstellung in eine Ausgangsstellung bringbar ist, mit einem Zwischenstück, an welchem das Auslöselement zwischen einer Ruhestellung und einer Auslösestellung, in welcher der Betätigungshebel in die Ausgangsstellung bringbar ist, um eine Schwenkachse schwenkbar gelagert ist. Das Auslöseelement ist an dem Zwischenstück auch in einer Schieberichtung senkrecht zur Schwenkachse verschieblich gelagert. Die Rückstellvorrichtung beinhaltet auch ein Federelement zum Erzeugen einer parallel zur Schieberichtung wirkenden Federkraft, mit welcher das Auslöseelement an dem Zwischenstück vorgespannt angeordnet ist. Die Rückstellvorrichtung weist außerdem eine Überschaltsicherungseinrichtung mit zumindest einer Überschaltfeder auf, welche in einem Überschaltfall eine Bewegung des Zwischenstücks relativ zu dem Betätigungshebel ermöglicht und somit eine Zerstörung des Auslöseelements bzw. den Zwischenstücks verhindert. Die Erfindung betrifft auch ein Kraftfahrzeug mit einer solchen Rückstellvorrichtung.

Rückstellvorrichtungen für Lenkstockschalter - so genannte Blinkerrückstellungen - sind bereits Stand der Technik. So beschreibt beispielsweise die Druckschrift US 6 186 022 B1 eine derartige Rückstellvorrichtung, welche ein Auslöseelement in Form einer Zunge bzw. eines Fingers aufweist, die/der beim Drehen des Lenkrades mitgenommen wird und dann das Rückstellen des Lenkstockschalters bzw. des Betätigungshebels in seine Ausgangsstellung bewirkt. Dabei ist dieses Auslöseelement einerseits schwenkbar gelagert; andererseits ist es auch verschieblich gelagert, und zwar in einer Schieberichtung, in welcher das Auslöseelement auch mittels eines Federelements vorgespannt angeordnet ist. Wird das Auslöseelement beim Drehen des Lenkrades mitgenommen, drückt das Auslöseelement den Lenkstockschalter wieder in seine Ausgangposition.

Eine Rückstellvorrichtung für einen Lenkstockschalter ist außerdem aus dem Dokument DE 694 14 867 T2 als bekannt zu entnehmen.

Eine Rückstellvorrichtung ist auch im Dokument DE 44 18 328 A1 offenbart. Diese Rückstellvorrichtung weist zusätzlich noch eine Überschaltsicherung auf, welche im Überschaltfall - wenn der Fahrer eine Kraft auf den Lenkstockschalter beim Rückdrehen des Lenkrades ausübt - eine Bewegung des Auslöseelements relativ zum Betätigungshebel ermöglicht und somit eine Zerstörung des Auslöseelements verhindert. Diese Überschaltsicherung beinhaltet in der Regel eine Überschaltfeder, welche bei einer gewissen Kraft nachgibt und somit eine Zerstörung der Rückstelleinrichtung verhindert.

Eine gattungsgemäße Rückstellvorrichtung ist im Dokument EP 1 060 949 A2 offenbart.

An dem Stand der Technik ist als nachteilig der Umstand anzusehen, dass aufgrund der Anordnung der Überschaltfeder die gesamte Rückstellvorrichtung wenig kompakt ausgeführt werden kann. Außerdem ist nachteilig, dass Aufgrund der Vielzahl von Bauteilen die mechanischen Toleranzen nur mit einem großen Aufwand ausgeglichen werden können.

Es ist Aufgabe der Erfindung, eine Lösung aufzuzeigen, wie eine Rückstellvorrichtung der eingangs genannten Gattung besonders kompakt aufgebaut werden kann.

Diese Aufgabe wird erfindungsgemäß durch eine Rückstellvorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Rückstellvorrichtung für eine Lenkstockschaltereinrichtung eines Kraftfahrzeugs umfasst ein Auslöseelement, mittels welchem ein Betätigungshebel der Lenkstockschaltereinrichtung aus einer Betätigungsstellung in eine Ausgangsstellung bringbar ist, wie auch ein Zwischenstück, an welchem das Auslöseelement zwischen einer Ruhestellung und einer Auslösestellung, in welcher der Betätigungshebel in die Ausgangsstellung bringbar ist, um eine Schwenkachse schwenkbar gelagert ist. Das Auslöseelement ist an dem Zwischenstück außerdem in einer Schieberichtung senkrecht zur Schwenkachse verschiebbar gelagert. Es ist ein Federelement zum Erzeugen einer parallel zur Schieberichtung wirkenden Federkraft bereitgestellt, mit welcher das Auslöseelement an dem Zwischenstück vorgespannt angeordnet ist. Die Rückstellvorrichtung weist auch eine Überschaltsicherungseinrichtung mit zumindest einer Überschaltfeder auf, welche in einem Überschaltfall eine Bewegung des Zwischenstücks relativ zu dem Betätigungshebel ermöglicht und somit eine Zerstörung des Auslöseelements verhindert. Die zumindest eine Überschaltfeder und das Federelement sind in einer Richtung senkrecht zur Schieberichtung nebeneinander angeordnet. Erfindungsgemäß sind die zumindest eine Überschaltfeder einerseits und das Federelement andererseits parallel nebeneinander angeordnet.

Die Erfindung geht also den Weg, die zumindest eine Überschaltfeder und das Federelement nebeneinander, parallel zueinander, anzuordnen. Dies bedeutet, dass eine Projektion der Überschaltfelder in einer Richtung senkrecht zu ihrer Federachse auf das Federelement existiert. Die Erfindung beruht auf der Erkenntnis, dass im Stand der Technik eine kompakte Ausführung der Rückstellvorrichtung deshalb nicht möglich ist, weil die Überschaltfeder und das Federelement in Reihe bzw. in Serie zueinander sowie miteinander fluchtend angeordnet sind, was weiterhin auch den Nachteil hat, dass die mechanischen Toleranzen nur schwierig ausgeglichen werden können, weil die gesamte Federanordnung relativ lange ist. Die Erfindung basiert ferner auf der Erkenntnis, dass die Rückstellvorrichtung im Vergleich zum Stand der Technik kompakter ausgeführt werden kann, wenn die Überschaltfeder und das Federelement in Richtung senkrecht zu den jeweiligen Federachsen nebeneinander, insbesondere in Richtung senkrecht zu den Federachsen in Überlappung, angeordnet sind. Somit ist die Rückstellvorrichtung besonders kompakt, und außerdem ergeben sich wesentliche Vorteile hinsichtlich der mechanischen Toleranzen, weil die beiden Federn nicht mehr in Serie zueinander angeordnet sind.

Dabei ist insbesondere vorgesehen, dass zumindest der überwiegende Längenbereich des Federelements - und insbesondere das gesamte Federelement - in Richtung quer zur Federachse die Überschaltfeder überlappt. Dann kommen die Vorteile der Erfindung vollständig zum Tragen.

Die Überschaltsicherungseinrichtung ist bevorzugt an einem Rastteil angeordnet, welches eine Raststruktur zum Einrasten des Betätigungshebels in seiner Betätigungsstellung aufweist. Dabei ist insbesondere die Überschaltfeder einerseits an dem Rastteil abgestützt, andererseits kann sie an dem Zwischenstück abgestützt sein, an welchem auch das Auslöseelement gelagert ist, welches zum Rückstellen des Betätigungshebels dient. Eine solche Anordnung der Überschaltsicherungseinrichtung sorgt für eine noch kompaktere Ausgestaltung der Rückstellvorrichtung.

Wie bereits ausgeführt, kann die zumindest eine Überschaltfeder einerseits an dem Zwischenstück und andererseits an dem Rastteil abgestützt sein. Somit kann das Zwischenstück relativ zu dem starren Rastteil im Überschaltfall bewegt werden, sodass sich auch das Auslöseelement relativ zum Rastteil bewegt und eine Zerstörung des Auslöseelements vermieden wird. Außerdem sorgt diese Ausführungsform für eine besonders kompakte Ausgestaltung der Rückstellvorrichtung.

Die Rückstellvorrichtung kann auch ein um eine zweite Schwenkachse schwenkbares Mitnehmerteil aufweisen, mit welchem der Betätigungshebel verbunden werden kann. Das Mitnehmerteil kann einen von einem Grundkörper des Mitnehmerteils in einer Richtung senkrecht zur Schwenkachse - insbesondere in Richtung zu einer Lenkspindel hin - abstehenden Arm aufweisen, an welchem eine Führung, insbesondere eine Kulisse, für einen Zapfen des Auslöseelements ausgebildet ist. Entlang der Kulisse bzw. der Führung kann der Zapfen des Auslöseelements beim Bewegen des Betätigungshebels zwischen der Ausgangsstellung und der Betätigungsstellung bewegt werden. Somit ist das Auslöseelement quasi an dem Arm des Mitnehmerteils angeordnet und kann somit besonders wirkungsvoll das Mitnehmerteil und somit den Betätigungshebel in die Ausgangsstellung drücken.

Besonders bevorzugt ist es, wenn an einer der Führung gegenüber liegenden Seite des Arms zumindest ein elektrisches Kontaktelement angeordnet ist, welches in der Betätigungsstellung des Betätigungshebels mit einem zugeordneten weiteren Kontaktelement elektrisch koppelbar ist. Auf diese Weise übernimmt der Arm des Mitnehmerteils grundsätzlich zwei verschiedene Funktionen: einerseits die Funktion der Führung des Auslöseelements und andererseits auch die Funktion eines elektrischen Schalters, mittels welchem die dem Betätigungshebel zugeordnete Funktion des Kraftfahrzeugs aktiviert bzw. deaktiviert werden kann, nämlich beispielsweise ein Blinker. Diese Ausführungsform ermöglicht außerdem, dass der Arm des Mitnehmerteils zwischen dem Auslöseelement einerseits und einer Platine andererseits angeordnet sein kann, an welcher das weitere Kontaktelement angebracht ist.

Das Zwischenstück weist bevorzugt eine senkrecht zur Schwenkachse ausgebildete Führungsfläche auf, an welcher das Auslöseelement gelagert bzw. abgestützt ist. Es können dabei Mittel vorgesehen sein, welche das Auslöseelement gegen die Führungsfläche in Richtung parallel zur Schwenkachse drücken. Das Auslöseelement kann also an einer Führungsfläche des Zwischenstücks anliegend angeordnet sein, welche senkrecht zur Schwenkachse des Auslöseelements ausgebildet ist, wobei Druckmittel vorgesehen sein können, durch welche das Auslöseelement gegen die Führungsfläche - also in Richtung parallel zur Schwenkachse - gedrückt wird. Somit wird eine spielfreie Anordnung des Auslöseelements an dem Zwischenstück in Richtung der Schwenkachse ermöglicht. Es hat sich nämlich herausgestellt, dass bei einer solchen Anordnung keine Klappergeräusche beim Rückstellen des Betätigungshebels entstehen. Hierdurch wird erreicht, dass der Fahrer keine störenden Geräusche wahrnimmt, wodurch wiederum der Fahrkomfort beim Führen des Kraftfahrzeugs verbessert wird.

Die genannten Mittel können derart ausgebildet sein, dass eine Federkraft auf das Auslöseelement gegen die Führungsfläche wirkt, so dass die Federkraft das Auslöseelement gegen die Führungsfläche drückt bzw. vorspannt. Es kann insbesondere die Federkraft des genannten Federelements sein, welche eine Kraftkomponente in Richtung parallel zur Schwenkachse des Auslöseelements aufweist und somit das Auslöseelement gegen die Führungsfläche drückt. Durch eine Federkraft können Toleranzen ausgeglichen werden, so dass stets eine spielfreie Anordnung bzw. Lagerung des Auslöseelements an dem Zwischenstück ermöglicht wird.

In einer bevorzugten Ausführungsform der Erfindung ist vorgesehen, dass an dem Zwischenstück ein Schiebeelement in der Schieberichtung verschiebbar gelagert ist, welches einerseits über das Federelement an einer Wandung des Zwischenstücks und andererseits an dem Auslöseelement abgestützt ist, so dass über das Schiebeelement die Federkraft des Federelements auf das Auslöseelement aufgebracht ist und somit das Auslöseelement an dem Zwischenstück in Schieberichtung vorgespannt angeordnet ist. Mit einem derartigen Schiebeelement kann einerseits die Vorspannung des Auslöseelements in der Schieberichtung ohne viel Aufwand und kompakt realisiert werden; andererseits kann somit das Auslöseelement auch wirkungsvoll gegen die Führungsfläche gedrückt werden.

Das Schiebeelement und/oder das Federelement ist/sind bevorzugt ein Bestandteil der oben genannten Mittel, welche das Auslöseelement gegen die Führungsfläche drücken.

Besonders bevorzugt weist das Schiebeelement einen senkrecht zur Schwenkachse abstehenden und in Richtung zum Auslöseelement hin weisenden Fortsatz auf, welcher zumindest bereichsweise an einer von der Führungsfläche abgewandten Seite des Auslöseelements anliegt und das Auslöseelement gegen die Führungsfläche in Richtung parallel zur Schwenkachse drückt. Mit einem derartigen Fortsatz kann eine Kraftkomponente des Federelements in Richtung parallel zur Schwenkachse erzeugt werden, so dass sich der Einsatz eines zusätzlichen Federelements mit den damit verbundenen Nachteilen hinsichtlich Kosten und Bauraum erübrigt. Die Federkraft des ohnehin vorhandenen Federelements kann durch einen solchen Fortsatz in zwei Kraftkomponenten aufgeteilt werden, nämlich eine Kraftkomponente in der Schieberichtung sowie eine Kraftkomponente in der Richtung parallel zur Schwenkachse.

Es hat sich dabei als vorteilhaft erwiesen, wenn der Fortsatz eine Abstützschräge aufweist, an welcher das Auslöseelement abgestützt ist. Gerade dann kann ohne viel Aufwand erreicht werden, dass eine Kraftkomponente des sich in der Schieberichtung erstreckenden Federelements in Richtung parallel zur Schwenkachse und somit senkrecht zur Schieberichtung erzeugt wird. Außerdem ermöglicht die Abstützschräge, dass die jeweiligen, einander zugewandten Stirnseiten des Schiebeelements einerseits und des Auslöseelements andererseits in einem geringen Abstand zueinander angeordnet sind, so dass die Federkraft über die Abstützschräge - insbesondere ausschließlich über die Abstützschräge - auf das Auslöseelement übertragen wird. Diese Federkraft besitzt dann - wie bereits ausgeführt - eine Kraftkomponente in der Schieberichtung sowie eine Kraftkomponente senkrecht dazu, durch welche das Auslöseelement gegen die Führungsfläche gedrückt wird. Insbesondere verläuft die Abstützschräge in einem Winkel von 30° bis 60° zu der Schieberichtung bzw. der Schwenkachse.

Das Schiebeelement kann sich durch eine in dem Zwischenstück ausgebildete Durchgangsöffnung hindurch erstrecken, und das Schiebeelement kann an einer weiteren Führungsfläche des Zwischenstücks verschiebbar gelagert sein, welche an einer der Führungsfläche für das Auslöseelement gegenüber liegenden Seite des Zwischenstücks ausgebildet ist. Somit kann erreicht werden, dass das Auslöseelement quasi zwischen seiner Führungsfläche einerseits und dem oben genannten Fortsatz des Schiebeelements andererseits geklemmt ist, während das Schiebeelement über die Durchgangsöffnung des Zwischenstücks hindurch die weitere Führungsfläche hintergreift. Somit ist eine stabile und rutschfeste Anordnung des Schiebeelements sowie des Auslöseelements an dem Zwischenstück gewährleistet.

Das Schiebeelement und das Auslöseelement weisen bevorzugt jeweilige, einander zugewandte Stirnseiten auf. Eine der Stirnseiten, nämlich insbesondere die des Schiebeelements, weist bevorzugt eine konvexe Krümmung auf, während die andere Stirnseite vorzugsweise eine konkave Krümmung aufweist. Es kann hier vorgesehen sein, dass der Radius der konvexen Krümmung größer oder gleich dem Radius der konkaven Krümmung ist. Somit kann erreicht werden, dass beim Rückstellen des Betätigungshebels in seine Ausgangsstellung die Klatschgeräusche auf ein Minimum reduziert werden. Somit kann nämlich verhindert werden, dass die beiden Stirnseiten, welche vorzugsweise aufgrund der Abstützschräge in einem kleinen Abstand zueinander gehalten werden, beim Rückstellen des Betätigungshebels in Kontakt miteinander geraten und ein Geräusch verursachen.

In einer Ausführungsform weist das Auslöseelement ein länglich ausgeführtes und sich senkrecht zur Schwenkachse, insbesondere in der Schieberichtung erstreckendes Zungenelement auf, welches beim Auslenken aus der Kurve bzw. beim Drehen des Lenkrades mitgenommen wird und welches den Betätigungshebel des Lenkstockschalters in die Ausgangsstellung bewegt. Von dem Zungenelement kann ein Lagerteil parallel zur Schwenkachse abstehen, über welches die Schwenkachse verläuft sowie über welches das Auslöseelement an dem Zwischenstück gelagert ist. Es kann das Lagerteil sein, welches an der Führungsfläche des Zwischenstücks anliegt und somit an dem Zwischenstück schwenkbar gelagert ist. Dieses Lagerteil ist insbesondere einstückig mit dem Zungenelement ausgebildet. Durch eine solche Ausgestaltung des Auslöseelements kann eine räumliche Trennung zwischen dem Zungenelement einerseits und dem Zwischenstück bzw. dem Lagerteil andererseits erreicht werden, so dass das Zwischenstück selbst sogar in einem beliebigen Abstand zum Zungenelement angeordnet sein kann, wobei hierdurch die ordnungsgemäße Funktionsweise der Rückstellvorrichtung nicht beeinträchtigt wird.

Die Führungsfläche für das Auslöseelement ist bevorzugt an einer vom Zungenelement abgewandten Seite des Zwischenstücks ausgebildet, und das Zwischenstück weist vorzugsweise eine Durchgangsöffnung auf, durch welche sich das Lagerteil hindurch erstreckt und die Führungsfläche hintergreift. Somit ist eine stabile und wackelfreie bzw. spielfreie Anordnung des Auslöseelements in Richtung parallel zur Schwenkachse des Auslöseelements ermöglicht.

Ein erfindungsgemäßes Kraftfahrzeug umfasst eine Lenkstockschaltereinrichtung, sowie eine erfindungsgemäße Rückstellvorrichtung. Die mit Bezug auf die erfindungsgemäße Rückstellvorrichtung vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer und perspektivischer Darstellung eine Lenkstockschaltereinrichtung gemäß einer Ausführungsform der Erfindung;
- Fig. 2: in schematischer und perspektivischer Darstellung eine vergrößerte Ansicht der Lenkstockschaltereinrichtung gemäß Fig. 1;
- Fig. 3: in schematischer und perspektivischer Darstellung die Lenkstockschaltereinrichtung mit einer Platine;
- Fig. 4: in schematischer Darstellung eine Seitenansicht der Lenkstockschaltereinrichtung;
- Fig. 5: in schematischer und perspektivischer Darstellung einzelne Komponenten einer Rückstellvorrichtung gemäß einer Ausführungsform der Erfindung;
- Fig. 6 bis 8: unterschiedliche Ansichten der Rückstellvorrichtung;
- Fig. 9 und 10: unterschiedliche Ausführungsformen der Rückstellvorrichtung;
- Fig. 11: in schematischer und perspektivischer Darstellung die Rückstellvorrichtung mit einem Mitnehmerteil, welches einen von einem Grundkörper abstehenden Arm aufweist;
- Fig. 12: in schematischer und perspektivischer Darstellung die Rückstellvorrichtung, wobei ein Auslöseelement an dem Mitnehmerteil angeordnet ist;
- Fig. 13: in schematischer und perspektivischer Darstellung eine Rückstellvorrichtung gemäß einer Ausführungsform der Erfindung, wobei einzelne Komponenten näher dargestellt sind;
- Fig. 14 bis 19: unterschiedliche Ansichten der Rückstellvorrichtung; und
- Fig. 20a bis c: jeweils eine Draufsicht auf die Lenkstockschaltereinrichtung, wobei eine Rückstellung des Mitnehmerteils und somit eines Betätigungshebels näher erläutert wird.

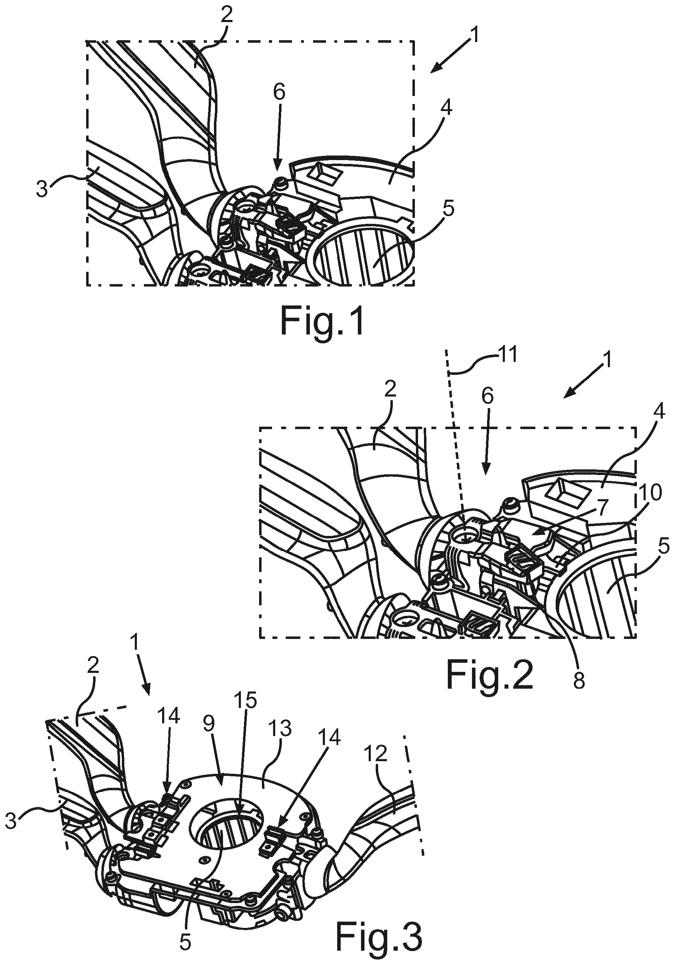

In Fig. 1 ist in schematischer und perspektivischer Darstellung eine Lenkstockschaltereinrichtung 1 dargestellt, welche in einem Kraftfahrzeug eingebaut werden kann. Die Lenkstockschaltereinrichtung 1 weist hier einen ersten und einen zweiten Betätigungshebel 2, 3 auf, wobei beispielsweise der erste Betätigungshebel 2 zum Aktivieren eines Blinkers des Kraftfahrzeugs dient. Die Betätigungshebel 2, 3 sind an einem Lenksäulenteil 4 schwenkbar gelagert, in welchem eine Aufnahme 5 für eine Lenkspindel ausgebildet ist. Die Aufnahme 5 ist im Querschnitt etwa kreisförmig ausgebildet und stellt quasi eine Hülse für die Lenkspindel dar. Zumindest dem ersten Betätigungshebel 2, welcher zum Aktivieren eines Blinkers dient, ist eine Rückstellvorrichtung 6 zugeordnet, mittels welcher der Betätigungshebel 2 aus seiner Betätigungsstellung, in welcher der Blinker aktiviert ist, in eine Ausgangsstellung, in welcher der Blinker deaktiviert ist, bewegbar ist, und zwar automatisch alleine durch Drehen des nicht dargestellten Lenkrades. Es sind dabei selbstverständlich zwei Betätigungsstellungen vorgesehen, nämlich eine für den linken Blinker und eine für den rechten Blinker.

In Fig. 2 ist die Rückstellvorrichtung 6 in einer vergrößerten Darstellung gezeigt. Der Rückstellvorrichtung 6 ist ein Mitnehmerteil 7 zugeordnet, an welchem elektrische Kontaktelemente 8 angebracht sind.

Wird der Betätigungshebel 2 in seine Betätigungsstellung bewegt, so kontaktieren die elektrischen Kontaktelement 8 korrespondierende Kontaktelemente, die an einer Platine 9 (siehe Fig. 3) angeordnet sind. Die Kontaktelemente 8 sind dabei an einer Seite des Mitnehmerteils 7 angeordnet, die im Betrieb des Kraftfahrzeugs dem Fahrer zugewandt ist.

Wie aus Fig. 2 weiterhin hervorgeht, beinhaltet die Rückstellvorrichtung 6 ein Auslöseelement 10, welches beim Drehen des Lenkrades beim Auslenken aus der Kurve von einem mit der Lenkspindel verbundenen Element mitgenommen und somit verschwenkt wird. Das Auslöseelement 10 drückt dabei das Mitnehmerteil 7, sodass der Betätigungshebel 2 in die Ausgangsstellung gebracht wird.

Das Mitnehmerteil 7 ist nämlich an dem Lenksäulenteil 4 schwenkbar gelagert, und zwar um eine parallel zur Lenkspindel verlaufende Schwenkachse 11. Außerdem ist der Betätigungshebel 2 mit dem Mitnehmerteil 7 verbunden. Dabei kann ebenfalls vorgesehen sein, dass eine relative Schwenkbewegung des Betätigungshebels 2 relativ zum Mitnehmerteil 7 möglich ist. Entscheidend ist allerdings, dass das Mitnehmerteil beim Schwenken des Betätigungshebels 2 von der Ausgangsstellung in die Betätigungsstellung auch mit bewegt bzw. mit geschwenkt wird. Somit ist auch das Mitnehmerteil 7 zwischen der Ausgangsstellung und der Betätigungsstellung schwenkbar, und zwar um die Schwenkachse 11.

In Fig. 3 ist die Lenkstockschaltereinrichtung 1 mit der Platine 9 dargestellt, wobei ein weiterer Betätigungshebel 12 ebenfalls erkennbar ist. Mit diesem Betätigungshebel 12 kann beispielsweise ein Scheibenwischer bzw. auch weitere Funktionen im Kraftfahrzeug aktiviert werden.

Wie aus Fig. 3 hervorgeht ist die Platine 9 eine für alle Betätigungshebel 2, 3, 12 gemeinsame Leiterplatte, sodass keine weiteren Platinen eingesetzt werden müssen. Auf der Platine 9 sind an der vom Mitnehmerteil 7 abgewandten Seite 13 elektronische Komponenten 14 angebracht, wie beispielsweise Steuergeräte, elektrische Schalter und dergleichen.

Die Platine 9 weist eine kreisförmige Durchgangsöffnung 15 auf, durch welche sich die Lenkspindel hindurch erstreckt (in Fig. 3 nicht dargestellt). Diese Durchgangsöffnung 15 ist konzentrisch zu der Aufnahme 5 für die Lenkspindel angeordnet.

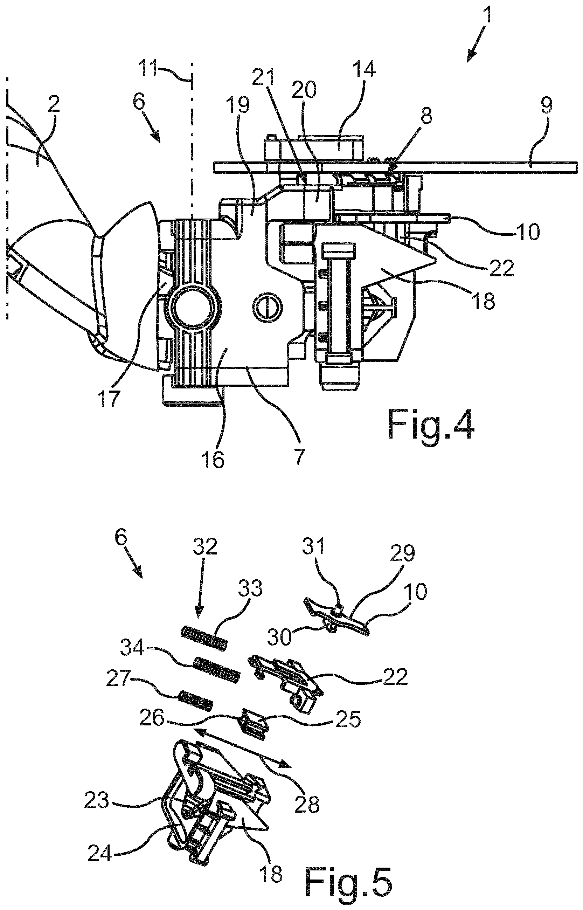

In Fig. 4 ist eine Seitenansicht der Rückstellvorrichtung 6 näher dargestellt. Hier ist die Ausgestaltung des Mitnehmerteils 7 besonders gut zu erkennen. Das Mitnehmerteil 7 weist einen Grundkörper 16 auf, welcher ein Hohlkörper ist und durch welchen sich ein Rastbolzen 17 des Betätigungshebels 2 hindurch erstreckt. Der Rastbolzen 17 erstreckt sich dabei bis zu einem Rastteil 18 hin, an welchem eine Raststruktur zum Einrasten des Rastbolzens 17 in der Betätigungsstellung sowie der Ausgangsstellung ausgebildet ist. Diese Raststruktur ist an einer dem Betätigungshebel 2 zugewandten Seite des Rastteils 18 ausgebildet. Der Rastbolzen 17 mündet also an der Raststruktur bzw. gleitet an dieser und kann in dort ausgebildete Rastvertiefungen einrasten.

Von einem der Platine 9 zugewandten Rand 19 des Grundkörpers 16 des Mitnehmerteils 7 steht ein im Wesentlichen plattenförmig ausgeführter Arm 20 ab, der sich in Richtung senkrecht zur Schwenkachse 11 des Mitnehmerteils 7 erstreckt und in Richtung zur Lenkspindel hin zeigt. Der Arm 20 ist also ein plattenförmiges, relativ flach ausgeführtes Element, welches mit dem Grundkörper 16 bzw. dem Rand 19 des Grundkörpers 16 bündig abschließt. An einer der Platine 9 zugewandten und von dem Auslöselement 10 abgewandten Seite 21 des Arms 20 sind die elektrischen Kontaktelemente 8 angebracht, welche korrespondierende Kontaktelemente der Platine 9 kontaktieren können, und zwar in der Betätigungsstellung. An der dem Arm 20 zugewandten Seite der Platine 9 sind nämlich die korrespondierenden Kontaktelemente angebracht, welche mit den Kontaktelementen 8 elektrisch verbunden werden können.

An der von dem Arm 20 abgewandten Seite der Platine 9 sind hingegen die elektronischen Komponenten 14 angebracht.

Auf der den Kontaktelementen 8 gegenüberliegenden Seite des Arms 20 befindet sich das Auslöseelement 10 zum Rückstellen des Betätigungshebels 2. Dieses Auslöseelement 10 ist mit seinem Zapfen an einer Kulisse des Armes 20 gelagert, was weiter unten näher beschrieben wird.

Auf der den Kontaktelementen 8 gegenüberliegenden Seite des Arms 20 befindet sich außerdem das Rastteil 18, wie auch ein in Fig. 4 nicht in seiner Gesamtheit dargestelltes Zwischenstück 22. An diesem Zwischenstück 22 ist das Auslöseelement 10 gelagert.

In Fig. 5 sind einige Komponenten der Rückstellvorrichtung 6 näher dargestellt. Wie bereits ausgeführt, weist das Rastteil 18 eine Raststruktur 23 auf, welche an einer dem Betätigungshebel 2 zugewandten Seite 24 des Rastteils 18 ausgebildet ist. Diese Raststruktur 23 kann beispielsweise Rastöffnungen beinhalten, in welche der Rastbolzen 17 des Betätigungshebels 2 einrastet, und zwar in der Betätigungsstellung und der Ausgangsstellung. Die Rückstellvorrichtung 6 umfasst außerdem ein Schiebeelement 25 mit einer Hülse 26, in welche ein Federelement 27 in Form einer Spiralfeder aufgenommen werden kann. Wie weiter unten noch näher beschrieben werden wird, kann das Schiebeelement 25 entweder an dem Rastteil 18 oder aber an dem Zwischenstück 22 verschiebbar gelagert sein, nämlich in einer senkrecht zur Schwenkachse 11 orientierten Schieberichtung 28. An dem Zwischenstück 22 ist außerdem das Auslöseelement 10 schwenkbar und verschiebbar gelagert. Das Auslöseelement 10 weist dabei ein Zungenelement 29 auf, welches in Form eines Streifens und damit länglich ausgeführt ist. Das Zungenelement 29 weist also die Form eines Stäbchens auf, von welchem ein Lagerteil 30 senkrecht absteht, über welches das Auslöseelement 10 an dem Zwischenstück 22 gelagert ist. Die nähere Ausgestaltung des Auslöseelements 10 wird weiter unten näher beschrieben. Das Auslöseelement 10 weist auch einen Zapfen 31 auf, welcher an der dem Lagerteil 30 gegenüberliegenden Seite des Zungenelements 29 absteht und mit dem Lagerteil 30 fluchtet.

Zur Rückstellvorrichtung 6 gehört außerdem eine Überschaltsicherungseinrichtung 32, welche im Ausführungsbeispiel zwei Überschaltfelder 33, 34 umfasst. Die beiden Überschaltfedern 33, 34 sind als Spiralfedern ausgebildet. Einerseits werden diese Überschaltfedern 33, 34 an dem Zwischenstück 22 abgestützt; andererseits werde sie an dem Rastteil 18 abgestützt und erstrecken sich dabei entlang der Schieberichtung 28.

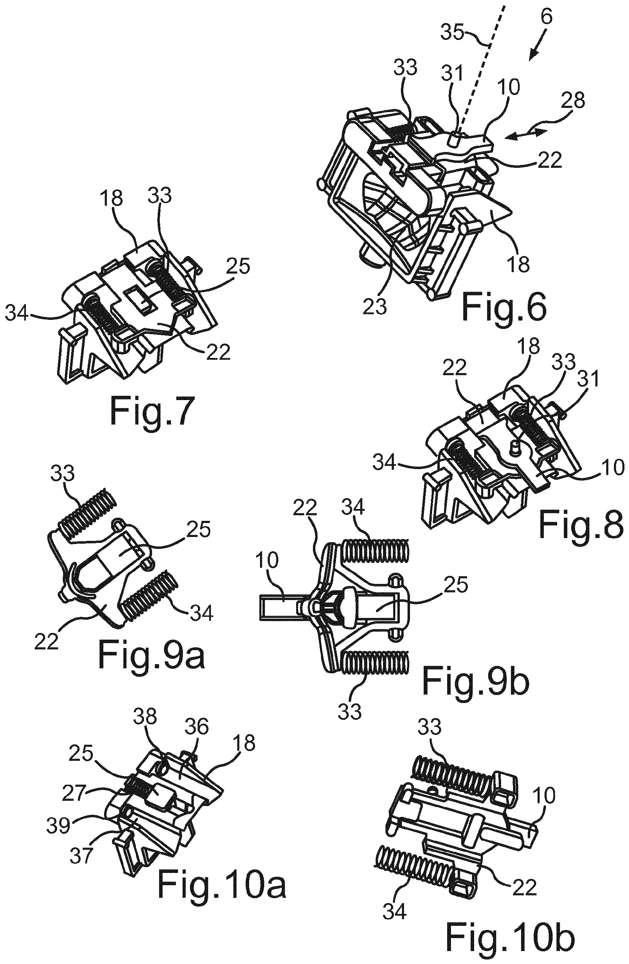

In den Figuren 6 bis 8 sind unterschiedliche Ansichten des Rastteils 18 mit dem daran angebrachten Zwischenstück 22 dargestellt. Das Rastteil 18 ist bei der Lenkstockschaltereinrichtung 1 ein bezüglich des Lenksäulenteils 4 unbewegliches Bauteil, d. h. das Rastteil 18 stellt quasi ein ortsfestes Element dar, bezüglich dessen das Mitnehmerteil 7 geschwenkt wird. Demgegenüber ist das Auslöseelement 10 an dem Zwischenstück 22 und somit auch bezüglich des Rastteils 18 schwenkbar gelagert, und zwar um eine parallel zur Schwenkachse 11 verlaufende Schwenkachse 35. Außerdem ist das Auslöseelement 10 auch in der Schieberichtung 28 senkrecht zur Schwenkachse 35 verschiebbar gelagert und dabei mittels des Federelements 27 federnd vorgespannt.

Auch das Zwischenstück 22 ist an dem Rastteil 18 beweglich gelagert, und zwar über die Überschaltfedern 33, 34. Diese Relativbewegung zwischen dem Zwischenstück 22 und dem Rastteil 18 wird jedoch erst in einem Überschaltfall bewirkt.

In Fig. 7 ist das Zwischenstück 22 ohne das Auslöseelement 10 dargestellt, sodass auch das Schiebeelement 25 erkennbar ist. Das Federelement 27 befindet sich dabei in der Hülse 26 des Schiebeelements 25 (siehe Fig. 5). Wie aus den Figuren 9a und 9b hervorgeht, kann sowohl das Schiebeelement 25 als auch das Auslöseelement 10 an dem Zwischenstück 22 gelagert sein. Alternativ kann vorgesehen sein, dass das Schiebeelement 25 an dem Rastteil 18 gelagert ist, während das Auslöseelement 10 an dem Zwischenstück 22 gelagert ist. Eine solche Ausgestaltung ist in den Figuren 10a und 10b dargestellt. In Fig. 10a ist außerdem das Federelement 27 zu erkennen. Unabhängig von der Ausgestaltung - sei es bei der Anordnung gemäß den Figuren 9a und 9b, sei es bei der Anordnung gemäß den Figuren 10a, 10b - ist die Funktionsweise der Rückstellvorrichtung 6 gleich.

Wie insbesondere aus Fig. 10a hervorgeht, weist das Rastteil 18 in allen Ausführungsformen zwei entlang der Schieberichtung 28 länglich ausgeführte Nuten 36, 37 auf, welche an einer dem Zwischenstück 22 zugewandten Seite des Rastteils 18 ausgebildet sind. Diese Nuten 36, 37 dienen zur Aufnahme der Überschaltfedern 33, 34 und haben somit eine an die Form der Federn angepasste Form. Die Nuten 36, 37 sind mit Abstützelementen 38, 39 begrenzt, an denen die jeweiligen Überschaltfedern 33, 34 abgestützt sind.

In allen Ausführungsformen ist vorgesehen, dass - wie aus den Figuren hervorgeht - das Federelement 27 auf der Höhe der Überschaltfedern 33, 34 angeordnet ist. Das Federelement 27 liegt dabei parallel zu den Überschaltfedern 33, 34 und in Richtung quer zur Federachse auch neben den Überschaltfedern 33, 34. Dies bedeutet, dass eine senkrecht zur Schieberichtung 28 verlaufende gedachte Linie, welche das Federelement 27 schneidet, auch senkrecht durch die Überschaltfedern 33, 34 verläuft. Eine solche Anordnung der Überschaltfedern 33, 34 auf den beiden Seiten des Federelements 27, sodass dieses Federelement 27 zwischen den Überschaltfedern 33, 34 angeordnet ist und die Federachse des Federelements 27 sich parallel zu den Achsen der Überschaltfedern 33, 34 erstreckt, sorgt insbesondere für eine kompakte Ausgestaltung der Rückstellvorrichtung 6 und hat außerdem Vorteile hinsichtlich der mechanischen Toleranzen.

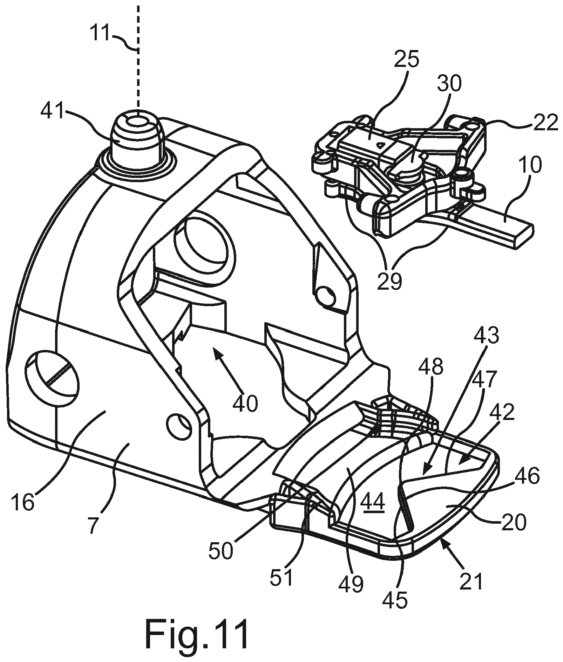

In Fig. 11 ist das Mitnehmerteil 7 im Detail dargestellt, nämlich zusammen mit dem Zwischenstück 22, dem Auslöserelement 10 sowie dem Schiebeelement 25. Wie aus Fig. 11 hervorgeht, ist der Grundkörper 16 des Mitnehmerteils 7 als hohler Körper ausgeführt, welcher einen Hohlraum 40 aufweist, welcher durchgängig ausgebildet ist.

Durch den Hohlraum 40 hindurch erstreckt sich der Rastbolzen 17 (siehe Fig. 4). Von dem Grundkörper 16 steht ein Zapfen 41 ab, über welchen das Mitnehmerteil 7 schwenkbar gelagert ist und welcher die Schwenkachse 11 definiert.

An einer der Seite 21 bzw. den dort angebrachten Kontaktelementen 8 gegenüberliegenden Seite 42 des Arms 20 ist eine Kulisse 43 ausgebildet, welche eine Führung für den Zapfen 31 des Auslöseelements 10 darstellt. Dabei ist an der Seite 42 des Arms 20 eine Vertiefung 44 ausgebildet, welche durch eine Wandung 45 begrenzt ist, welche die Kulisse 43 bildet. Die Wandung 45 und somit die Kulisse 43 hat die Form eines Dreiecks und weist dabei einen ersten Kulissenabschnitt 46 und einen zweiten Kulissenabschnitt 47 auf, welche spitzenförmig zusammengeführt sind. Es handelt sich hier um lineare Kulissenabschnitte 46, 47, die miteinander einen Winkel einschließen, welcher beispielsweise in einem Wertebereich von 60° bis 120° liegen kann. Dieser Winkel kann beispielsweise 90° betragen.

An der Wandung 45 liegt dann der Zapfen 31 des Auslöseelements 10 an, welcher entlang der Kulisse 43 geführt wird und dabei in der Vertiefung liegt. Befindet sich der Betätigungshebel 2 in der Ausgangsstellung, so liegt der Zapfen 31 des Auslöseelements 10 an einer Spitze 48 der Kulisse 43. Befindet sich der Betätigungshebel 2 hingegen in der Betätigungsstellung, so liegt der Zapfen 31 an dem anderen Ende des jeweiligen Kulissenabschnitts 46, 47, nämlich abhängig davon, in welche Richtung der Betätigungshebel 2 geschwenkt wird. das Zungenelement 29 des Auslöseelements 10 gleitet dabei an einer Fläche 49 des Arms 20, welche durch die Stege 50, 51 beidseitig begrenzt ist. An den Stegen 50 bzw. 51 wird das Mitnehmerteil 7 durch das Zungenelement 29 des Auslöselements 10 beim Rückstellen in die Ausgangsstellung gedrückt. Die Rückstellung des Mitnehmerteils 7 erfolgt also durch Drücken an dem jeweiligen Steg 50, 51 und zwar mittels des Zungenelements 29.

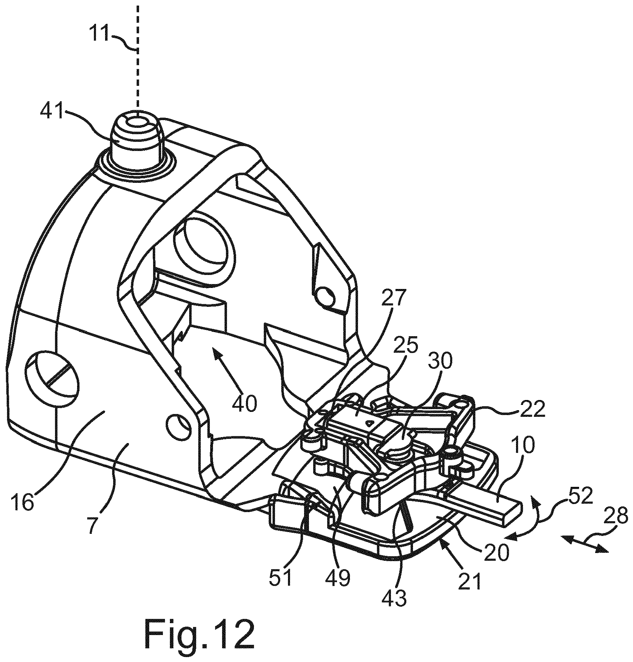

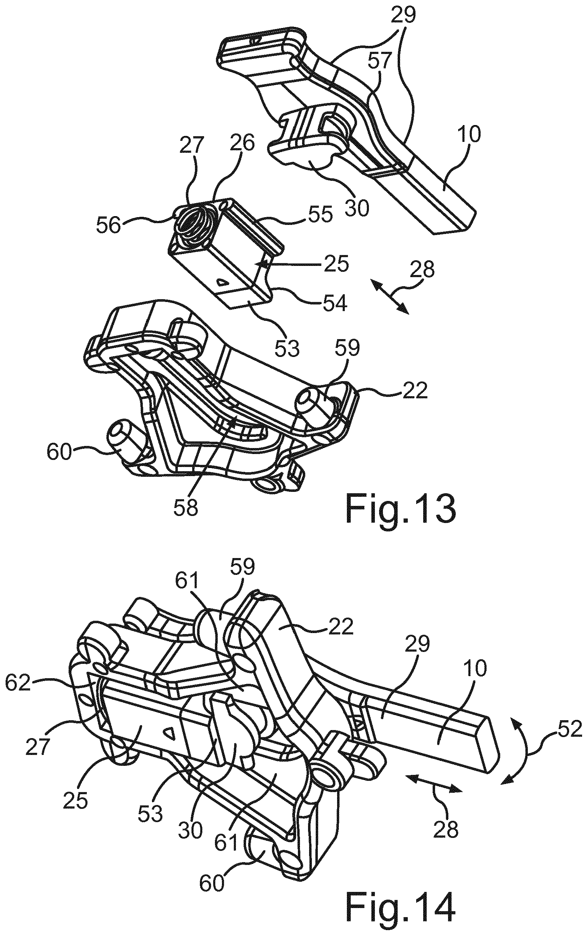

In Fig. 12 ist das Mitnehmerteil 7 zusammen mit dem daran angeordneten Auslöseelement 10 und dem Zwischenstück 22 dargestellt. Der Zapfen 31 des Auslöselements 10 ist dabei dem Arm 20 zugewandt und gleitet an der Kulisse 41. Wie bereits ausgeführt, kann das Auslöseelement 10 sowohl um die Schwenkachse 35 (siehe Fig. 6) geschwenkt werden, nämlich gemäß der Pfeildarstellung 52, als auch in der Schieberichtung 28 verschoben werden. In der Schieberichtung 28 ist das Auslöseelement 10 mit der Federkraft des Federelements 27 vorgespannt. Bezugnehmend nun auf die Figuren 13 bis 19 wird die Ausgestaltung des Auslöseelements 10 sowie des Zwischenstücks 22, wie auch des Schiebeelements 25 näher erläutert. In Fig. 13 ist dabei eine separate Darstellung des Auslöseelements 10 sowie des Schiebeelements 25 und des Zwischenstücks 22 gezeigt. Wie bereits ausgeführt, weist das Schiebeelement 25 eine axiale Hülse 26 auf, in welche das Federelement 27 aufgenommen ist. Das Schiebeelement 25 weist einen in Schieberichtung 28 weisenden Fortsatz 53 auf, welcher wiederum eine Schräge 54 aufweist. Das Schiebeelement 25 weist außerdem zwei seitlich abstehende Kragen 55, 56 auf, über welche das Schiebeelement 25 gelagert ist.

Wie bereits ausgeführt, weist das Auslöseelement 10 ein länglich ausgeführtes Zungenelement 29 auf, von welchem ein Lagerteil 30 senkrecht absteht. An einem Außenumfang des Lagerteils 30 ist eine Nut 57 in Umfangsrichtung ausgebildet, welche im Ausführungsbeispiel insgesamt die Form eines Halbkreises aufweist.

Das Zwischenstück 22 weist eine Durchgangsöffnung 58 auf. Außerdem sind an dem Zwischenstück 22 zwei Zapfen 59, 60 ausgebildet, welche zum Abstützen der oben genannten Überschaltfedern 33, 34 dienen. Diese Zapfen 59, 60 weisen ebenfalls in Schieberichtung 28.

Wie aus Fig. 14 hervorgeht, erstreckt sich das Lagerteil 30 durch die Durchgangsöffnung 58 des Zwischenstücks 22 hindurch, sodass das Lagerteil 30 die Rückseite des Zwischenstücks 22 hintergreift. An dem Zwischenstück 22 ist dabei eine Führungsfläche 61 ausgebildet, an welcher das Lagerteil 30 anliegt und dort gleitet. Das Lagerteil 30 hintergreift also die Führungsfläche 61, wobei sich das länglich ausgeführte Zungenelement 29 auf der gegenüberliegenden Seite des Zwischenstücks 22 befindet. Ein Rand der Durchgangsöffnung 58 des Zwischenstücks 22 greift dabei in die Nut 57 des Lagerteils 30.

Das Schiebeelement 25 erstreckt sich ebenfalls durch die gemeinsame Durchgangsöffnung 58 hindurch und ist einerseits über das Federelement 27 an einer die Durchgangsöffnung 58 begrenzenden Wandung 62 des Zwischenstücks 22 und andererseits an dem Lagerteil 30 abgestützt. Andererseits ist das Auslöseelement 10 - wie bereits ausgeführt - an der Kulisse 43 des Mitnehmerteils 7 abgestützt, siehe Fig. 11. Sowohl das Schiebeelement 25 als auch das Auslöseelement 10 sind hier in der Schieberichtung 28 senkrecht zur Schwenkachse 11 verschiebbar gelagert und mit der Federkraft des Federelements 27 vorgespannt. Das Schiebeelement 25 liegt also an dem Auslöseelement 10 spielfrei an.

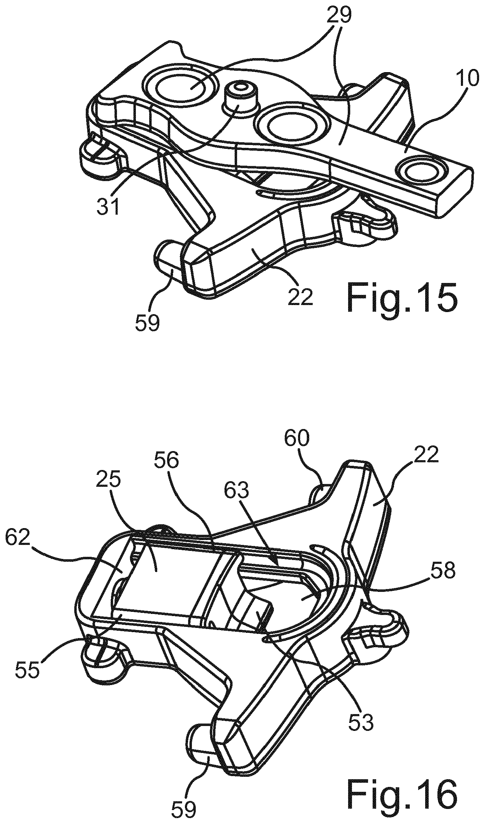

In Fig. 15 ist die gegenüberliegende Seite des Auslöseelements 10 dargestellt. Hier ist der Zapfen 31 besonders gut erkennbar, welcher an der Kulisse 43 gelagert ist. Über den Zapfen 31 ist das Auslöseelement 10 an der Kulisse 43 abgestützt.

Wie aus Fig. 16 hervorgeht, weist das Zwischenstück 22 an einer der Führungsfläche 61 gegenüberliegenden Seite eine weitere Führungsfläche 63 auf, an welcher die Kragen 55, 56 des Schiebeelements 25 anliegen und an welcher somit das Schiebeelement 25 verschiebbar gelagert ist. Der Fortsatz 53 des Schiebeelements 25 befindet sich dabei auf der gegenüberliegenden Seite des Zwischenstücks 22 bzw. jenseits der Durchgangsöffnung 58. Einerseits ist das Schiebeelement 25 somit über die Kragen 55, 56 an der Führungsfläche 63 gehalten; andererseits ist das Schiebeelement 25 über den Fortsatz 53 an dem Lagerteil 30 des Auslöseelements 10 abgestützt, so dass das Lagerteil 30 zwischen dem Fortsatz 53 und der Führungsfläche geklemmt ist.

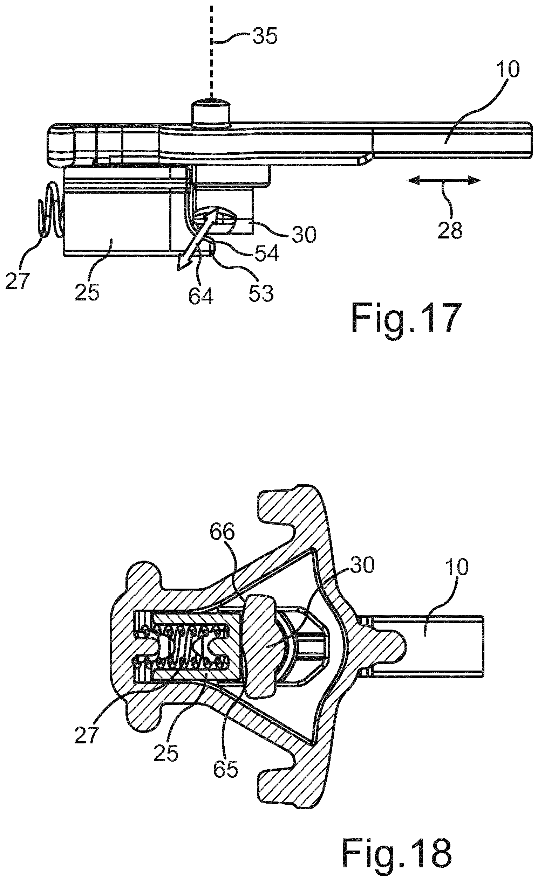

Bezugnehmend nun auf Fig. 17 liegt das Lagerteil 30 an der Schräge 54 des Fortsatzes 53 des Schiebelements 25 an. Zwischen den jeweiligen, einander zugewandten Stirnseiten des Schiebeelements 25 einerseits und des Lagerteils 30 andererseits ist somit ein kleiner Luftspalt ausgebildet bzw. diese Stirnseiten sind in einem geringen Abstand zueinander angeordnet. Das Lagerteil 30 steht in Kontakt lediglich mit der Schräge 54, sodass auf das Lagerteil 30 eine Federkraft 64 aufgebracht wird, welche eine Kraftkomponente parallel zur Schwenkachse 35 aufweist. Somit ist auch in Richtung parallel zur Schwenkachse 35 eine spielfreie Anordnung ermöglicht. Die Federkraft 64 wirkt also auf das Auslöseelement 10 sowohl in der Schieberichtung 28 als auch entlang der Schwenkachse 35, sodass mit lediglich einem einzigen Federelement 27 zwei unterschiedliche Wirkungsrichtungen erzielt werden.

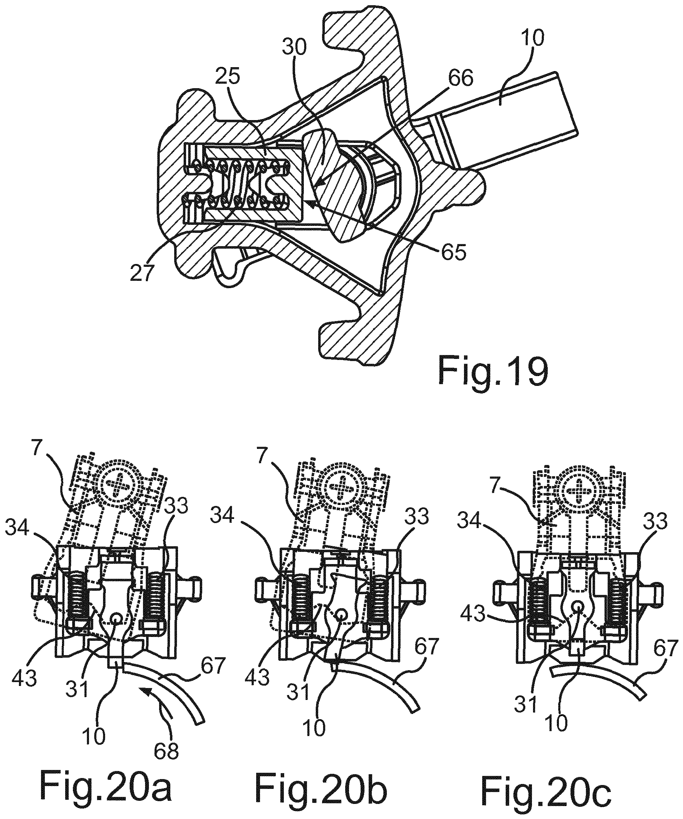

In den Figuren 18 und 19 ist eine schematische Draufsicht auf die Anordnung noch einmal dargestellt, wobei in Fig. 18 das Auslöseelement 10 sich in einer Ruhestellung befindet, während das Auslöseelement 10 in Fig. 19 in einer Auslösestellung gezeigt ist. Zu erkennen sind auch jeweilige Stirnseiten 65, 66 des Schiebeelements 25 einerseits und des Lagerteils 30 andererseits, welche einander zugewandt sind. Die beiden Stirnseiten 65, 66 weisen jeweils eine Krümmung auf: Im Ausführungsbeispiel weist das Schiebeelement 25 eine konvexe Stirnseite 65 auf, während die Stirnseite 66 des Lagerteils 30 konkav ausgebildet ist und quasi in die konvexe Stirnseite 65 einragt. In einer Ausführungsform ist dabei vorgesehen, dass der Radius der Krümmung der Stirnseite 65 des Schiebelements 25 größer oder gleich dem Radius der Krümmung des Lagerteils 30 ist. Somit können Klatschgeräusche bei der Rückstellung des Betätigungshebels 2 verhindert werden.

In der in Fig. 19 dargestellten Auslösestellung des Auslöseelements 10 drückt dieses Auslöseelement 10 das Mitnehmerteil 7 an dem jeweiligen Steg 50, 51, sodass das Mitnehmerteil 7 in die Ausgangsstellung gebracht wird.

Bezugnehmend nun auf die Figuren 20a bis 20c wird ein Auslösevorgang des Betätigungshebels 2 bzw. des Mitnehmerteils 7 näher erläutert. In Fig. 20a befindet sich das Mitnehmerteil 7 in der Betätigungsstellung, in welcher der Blinker aktiviert ist. Nun dreht der Fahrer sein Lenkrad, sodass ein mit der Lenkspindel verbundenes Element 67 in Drehrichtung des Lenkrades gemäß der Pfeildarstellung 68 entlang eines Bogens bewegt wird. Das Element 67 betätigt dann das Auslöseelement 10, welches nun aus der in Fig. 20a dargestellten Ruhestellung in eine in Fig. 20b dargestellte Auslösestellung verschwenkt wird, nämlich um die Schwenkachse 35. In dieser Stellung drückt das Auslöseelement 10 das Mitnehmerteil 7, sodass das Mitnehmerteil 7 wieder in die Ausgangsstellung bewegt wird. Dabei gleitet der Zapfen 31 entlang der Kulisse 43, sodass das Auslöseelement 10 auch ein wenig in der Schieberichtung 28 verschoben wird. In Fig. 20c ist die Ausgangsstellung des Mitnehmerteils 7 dargestellt, wobei das Auslöselement 10 sich wieder in der Ruhestellung befindet.

## Patentansprüche

1. Rückstellvorrichtung (6) für eine Lenkstockschaltereinrichtung (1) eines Kraftfahrzeugs, mit einem Auslöseelement (10), mittels welchem ein Betätigungshebel (2) der Lenkstockschaltereinrichtung (1) aus einer Betätigungsstellung in eine Ausgangsstellung bringbar ist, mit einem Zwischenstück (22), an welchem das Auslöseelement (10) zwischen einer Ruhestellung und einer Auslösestellung, in welcher der Betätigungshebel (2) in die Ausgangsstellung bringbar ist, um eine Schwenkachse (35) schwenkbar gelagert ist, wobei das Auslöseelement (10) an dem Zwischenstück (22) außerdem in einer Schieberichtung (28) senkrecht zur Schwenkachse (35) verschiebbar gelagert ist, mit einem Federelement (27) zum Erzeugen einer parallel zur Schieberichtung (28) wirkenden Federkraft, mit welcher das Auslöseelement (10) an dem Zwischenstück (22) vorgespannt angeordnet ist, und mit einer Überschaltsicherungseinrichtung (32) mit zumindest einer Überschaltfeder (33, 34), welche in einem Überschaltfall eine Bewegung des Zwischenstücks (22) relativ zu dem Betätigungshebel (2) ermöglicht, wobei
die zumindest eine Überschaltfeder (33, 34) und das Federelement (27) in einer Richtung senkrecht zur Schieberichtung (28) nebeneinander angeordnet sind, **dadurch gekennzeichnet, dass**
die zumindest eine Überschaltfeder (33, 34) und das Federelement (27) parallel nebeneinander angeordnet sind.

2. Rückstellvorrichtung (6) nach Anspruch 1,
**dadurch gekennzeichnet, dass**
die Überschaltsicherungseinrichtung (32) an einem Rastteil (18) angeordnet ist, welches eine Raststruktur (23) zum Einrasten des Betätigungshebels (2) aufweist.

3. Rückstellvorrichtung (6) nach Anspruch 2,
**dadurch gekennzeichnet, dass**
die zumindest eine Überschaltfeder (33, 34) einerseits an dem Zwischenstück (22) und andererseits an dem Rastteil (18) abgestützt ist.

4. Rückstellvorrichtung (6) nach einem der vorhergehenden Ansprüche,
**dadurch gekennzeichnet, dass**
die Überschaltsicherungseinrichtung (32) zwei Überschaltfedern (33, 34) aufweist und das Federelement (27) parallel zwischen den Überschaltfedern (33, 34) angeordnet ist.

5. Rückstellvorrichtung (6) nach einem der vorhergehenden Ansprüche,
**dadurch gekennzeichnet, dass**
die Rückstellvorrichtung (6) ein um eine zweite Schwenkachse (11) schwenkbares Mitnehmerteil (7) aufweist, mit welchem der Betätigungshebel (2) verbindbar ist und welches einen von einem Grundkörper (16) des Mitnehmerteils (7) in einer Richtung senkrecht zur zweiten Schwenkachse (11) abstehenden Arm (20) aufweist, an welchem eine Führung (43), insbesondere eine Kulisse, für einen Zapfen (31) des Auslöseelements (10) ausgebildet ist.

6. Rückstellvorrichtung (6) nach Anspruch 5,
**dadurch gekennzeichnet, dass**
an einer der Führung (43) gegenüberliegenden Seite (21) des Arms (20) zumindest ein elektrisches Kontaktelement (8) angeordnet ist, welches in der Betätigungsstellung des Betätigungshebels (2) mit einem zugeordneten weiteren Kontaktelement elektrisch koppelbar ist.

7. Rückstellvorrichtung (6) nach einem der vorhergehenden Ansprüche,
**dadurch gekennzeichnet, dass**
das Zwischenstück (22) eine senkrecht zur Schwenkachse (35) ausgebildete Führungsfläche (61) aufweist, an welcher das Auslöseelement (10) anliegt, und dass Mittel (25, 27) vorgesehen sind, welche das Auslöseelement (10) gegen die Führungsfläche (61) in Richtung parallel zur Schwenkachse (35) drücken.

8. Rückstellvorrichtung (6) nach Anspruch 7,
**dadurch gekennzeichnet, dass**
die Mittel (25, 27) derart ausgebildet sind, dass eine Federkraft (64), insbesondere die Federkraft des Federelements (27), auf das Auslöseelement (10) gegen die Führungsfläche (61) wirkt.

9. Rückstellvorrichtung (6) nach Anspruch 7 oder 8,
**dadurch gekennzeichnet, dass**
an dem Zwischenstück (22) ein Schiebeelement (25) in der Schieberichtung (28) verschiebbar gelagert ist, welches einerseits über das Federelement (27) an einer Wandung (62) des Zwischenstücks (22) und andererseits an dem Auslöseelement (10) abgestützt ist, so dass über das Schiebeelement (25) die Federkraft des Federelements (27) auf das Auslöseelement (10) aufgebracht ist.

10. Rückstellvorrichtung (6) nach Anspruch9,
**dadurch gekennzeichnet, dass**
das Schiebeelement (25) einen senkrecht zur Schwenkachse (35) abstehenden und in Richtung zum Auslöseelement (10) hin weisenden Fortsatz (53) aufweist, welcher zumindest bereichsweise an einer von der Führungsfläche (61) abgewandten Seite des Auslöseelements (10) anliegt und das Auslöseelement (10) gegen die Führungsfläche (61) in Richtung parallel zur Schwenkachse (35) drückt.

11. Rückstellvorrichtung (6) nach Anspruch 10,
**dadurch gekennzeichnet, dass**
der Fortsatz (53) eine Abstützschräge (54) aufweist, an welcher das Auslöseelement (10) abgestützt ist.

12. Kraftfahrzeug mit einer Lenkstockschaltereinrichtung (1) und mit einer Rückstellvorrichtung (6) nach einem der vorhergehenden Ansprüche.

## Claims

1. Resetting apparatus (6) for a steering-column switch device (1) of a motor vehicle, having a triggering element (10) by means of which an actuating lever (2) of the steering-column switch device (1) can be moved from an actuated position to an initial position, having an intermediate piece (22) on which the triggering element (10) is mounted so as to be pivotable about a pivot axis (35) between an inoperative position and a triggering position in which the actuating lever (2) can be moved to the initial position, wherein the triggering element (10) is also mounted on the intermediate piece (22) so as to be displaceable in a sliding direction (28) perpendicular to the pivot axis (35), having a spring element (27) for generating a spring force which acts parallel to the sliding direction (28) and with which the triggering element (10) is arranged under preload on the intermediate piece (22), and having a switch override protection device (32) with at least one switch override spring (33, 34) which, in a switch override situation, permits a movement of the intermediate piece (22) relative to the actuating lever (2), wherein the at least one switch override spring (33, 34) and the spring element (27) are arranged next to one another in a direction perpendicular to the sliding direction (28),
**characterized in that**
the at least one switch override spring (33, 34) and the spring element (27) are arranged parallel and next to one another.

2. Resetting apparatus (6) according to Claim 1,
**characterized in that**
the switch override protection device (32) is arranged on a detent part (18) which has a detent structure (23) for the engagement of the actuating lever (2).

3. Resetting apparatus (6) according to Claim 2,
**characterized in that**
the at least one switch override spring (33, 34) is supported at one side on the intermediate piece (22) and at the other side on the detent part (18).

4. Resetting apparatus (6) according to one of the preceding claims,
**characterized in that**
the switch override device (32) has two switch override springs (33, 34), and the spring element (27) is arranged parallel to and between the switch override springs (33, 34).

5. Resetting apparatus (6) according to one of the preceding claims,
**characterized in that**
the resetting apparatus (6) has a driver part (7) which is pivotable about a second pivot axis (11) and to which the actuating lever (2) can be connected and which has an arm (20) which projects from a main body (16) of the driver part (7) in a direction perpendicular to the second pivot axis (11), on which arm a guide (43), in particular a slotted guide, for a peg (31) of the triggering element (10) is formed.

6. Resetting apparatus (6) according to Claim 5,
**characterized in that**
at least one electrical contact element (8) is arranged on a side (21) of the arm (20) that is situated opposite the guide (43), which electrical contact element can be electrically coupled to an associated further contact element when the actuating lever (2) is in the actuated position.

7. Resetting apparatus (6) according to one of the preceding claims,
**characterized in that**
the intermediate piece (22) has a guide surface (61) which is formed perpendicular to the pivot axis (35) and against which the triggering element (10) bears, and **in that** means (25, 27) are provided which press the triggering element (10) against the guide surface (61) in a direction parallel to the pivot axis (35).

8. Resetting apparatus (6) according to Claim 7,
**characterized in that**
the means (25, 27) are designed in such a way that a spring force (64), in particular the spring force of the spring element (27), acts on the triggering element (10) towards the guide surface (61).

9. Resetting apparatus (6) according to Claim 7 or 8,
**characterized in that**
a slide element (25) is mounted on the intermediate piece (22) so as to be displaceable in the sliding direction (28), which slide element is supported at one side on a wall (62) of the intermediate piece (22) via the spring element (27) and at the other side on the triggering element (10), so that the spring force of the spring element (27) is exerted on the triggering element (10) via the slide element (25).

10. Resetting apparatus (6) according to Claim 9,
**characterized in that**
the slide element (25) has a projection (53) which projects perpendicular to the pivot axis (35) and in the direction of the triggering element (10) and which bears at least in regions against a side of the triggering element (10) that faces away from the guide surface (61) and which presses the triggering element (10) against the guide surface (61) in the direction parallel to the pivot axis (35).

11. Resetting apparatus (6) according to Claim 10,
**characterized in that**
the projection (53) has a supporting bevel (54) on which the triggering element (10) is supported.

12. Motor vehicle having a steering-column switch device (1) and having a resetting apparatus (6) according to one of the preceding claims.

## Revendications

1. Dispositif de rappel (6) pour un appareil de commutation sur colonne de direction (1) d'un véhicule automobile, comprenant un élément déclencheur (10), au moyen duquel un levier d'actionnement (2) de l'appareil de commutation sur colonne de direction (1) peut être amené d'une position d'actionnement dans une position de départ, comprenant une pièce intermédiaire (22), sur laquelle l'élément déclencheur (10) est monté en pivotement autour d'un axe de pivotement (35) entre une position de repos et une position de déclenchement, dans laquelle le levier d'actionnement (2) peut être amené dans la position de départ, l'élément déclencheur (10) étant en outre monté sur la pièce intermédiaire (22) de manière coulissante dans une direction de coulissement (28) perpendiculaire à l'axe de pivotement (35), comprenant un élément ressort (27) pour générer une force de ressort qui agit parallèlement à la direction de coulissement (28), avec laquelle l'élément déclencheur (10) est agencé précontraint sur la pièce intermédiaire (22), et comprenant un appareil de sécurisation de transition (32) pourvu d'au moins un ressort de transition (33, 34), qui permet en cas de transition un mouvement de la pièce intermédiaire (22) par rapport au levier d'actionnement (2),
ledit au moins un ressort de transition (33, 34) et l'élément ressort (27) étant agencés l'un à côté de l'autre dans une direction perpendiculaire à la direction de coulissement (28),
**caractérisé en ce que**
ledit au moins un ressort de transition (33, 34) et l'élément ressort (27) sont agencés parallèlement l'un à côté de l'autre.

2. Dispositif de rappel (6) selon la revendication 1, **caractérisé en ce que** l'appareil de sécurisation de transition (32) est agencé sur une partie d'arrêt (18), qui comprend une structure d'arrêt (23) pour l'encliquetage du levier d'actionnement (2).

3. Dispositif de rappel (6) selon la revendication 2, **caractérisé en ce que** ledit au moins un ressort de transition (33, 34) est supporté d'un côté sur la pièce intermédiaire (22) et d'un autre côté sur la partie d'arrêt (18).

4. Dispositif de rappel (6) selon l'une quelconque des revendications précédentes, **caractérisé en ce que** l'appareil de sécurisation de transition (32) comprend deux ressorts de transition (33, 34) et l'élément ressort (27) est agencé parallèlement entre les ressorts de transition (33, 34).

5. Dispositif de rappel (6) selon l'une quelconque des revendications précédentes, **caractérisé en ce que** le dispositif de rappel (6) comprend une partie d'entraînement (7) pivotable autour d'un deuxième axe de pivotement (11), avec laquelle le levier d'actionnement (2) peut être raccordé et qui comprend un bras (20) s'étendant à partir d'un corps de base (16) de la partie d'entraînement (7) dans une direction perpendiculaire au deuxième axe de pivotement (11), sur lequel un guide (43), notamment une coulisse, pour une goupille (31) de l'élément déclencheur (10) est formé.

6. Dispositif de rappel (6) selon la revendication 5, **caractérisé en ce qu'**au moins un élément de contact électrique (8) est agencé sur un côté (21), opposé au guide (43), du bras (20), qui peut être accouplé électriquement avec un autre élément de contact associé dans la position d'actionnement du levier d'actionnement (2).

7. Dispositif de rappel (6) selon l'une quelconque des revendications précédentes, **caractérisé en ce que** la pièce intermédiaire (22) comprend une surface de guidage (61) formée perpendiculairement à l'axe de pivotement (35), sur laquelle l'élément déclencheur (10) repose, et **en ce que** des moyens (25, 27) sont prévus, qui pressent l'élément déclencheur (10) contre la surface de guidage (61) dans une direction parallèle à l'axe de pivotement (35).

8. Dispositif de rappel (6) selon la revendication 7, **caractérisé en ce que** les moyens (25, 27) sont configurés de telle sorte qu'une force de ressort (64), notamment la force de ressort de l'élément ressort (27), agisse sur l'élément déclencheur (10) contre la surface de guidage (61).

9. Dispositif de rappel (6) selon la revendication 7 ou 8, **caractérisé en ce qu'**un élément de coulissement (25) est monté de manière coulissante dans la direction de coulissement (28) sur la pièce intermédiaire (22), qui est supporté d'un côté par l'intermédiaire de l'élément ressort (27) sur une paroi (62) de la pièce intermédiaire (22) et d'un autre côté sur l'élément déclencheur (10), de telle sorte que la force de ressort de l'élément ressort (27) soit appliquée par l'intermédiaire de l'élément de coulissement (25) sur l'élément déclencheur (10).

10. Dispositif de rappel (6) selon la revendication 9, **caractérisé en ce que** l'élément de coulissement (25) comprend un prolongement (53) s'étendant perpendiculairement à l'axe de pivotement (35) et orienté dans la direction de l'élément déclencheur (10), qui repose au moins en zones sur un côté, détourné de la surface de guidage (61), de l'élément déclencheur (10) et presse l'élément déclencheur (10) contre la surface de guidage (61) dans une direction parallèle à l'axe de pivotement (35).

11. Dispositif de rappel (6) selon la revendication 10, **caractérisé en ce que** le prolongement (53) comprend une inclinaison de support (54), sur laquelle l'élément déclencheur (10) est supporté.

12. Véhicule automobile pourvu d'un appareil de commutation sur colonne de direction (1) et pourvu d'un dispositif de rappel (6) selon l'une quelconque des revendications précédentes.
